Europäisches Patentamt

European Patent Office

Office européen des brevets

(11) Numéro de publication: **0 085 621**
**A2**

(12) # DEMANDE DE BREVET EUROPEEN

(21) Numéro de dépôt: **83400197.6**

(51) Int. Cl.³: **A 01 C 5/06**

(22) Date de dépôt: **28.01.83**

(30) Priorité: **03.02.82 FR 8201711**

(43) Date de publication de la demande:
**10.08.83 Bulletin 83/32**

(84) Etats contractants désignés:
**BE DE GB IT NL**

(71) Demandeur: **LELY FRANCE (Société à Responsabilité Limitée)**
**Km 4- Route de Paris**
**Valframbert F-61004 Alencon Cedex(FR)**

(72) Inventeur: **Damonneville, François**
**"Bourdon"**
**F-61250 Damigni(FR)**

(74) Mandataire: **Loyer, Bertrand et al,**
**Cabinet Pierre Loyer 18, rue de Mogador**
**F-75009 Paris(FR)**

(54) **Dispositifs enfouisseurs pour semoirs agricoles.**

(57) Dispositifs enfouisseurs pour semoirs comportant un mécanisme de distribution de graines alimentant une pluralité de goulottes, chacune débouchant dans un dispositif enfouisseur.

Chaque dispositif enfouisseur (1) est constitué par un fer plat (8) et un tube (6), dans lequel arrivent les graines, le fer plat (8) étant situé en avant du tube (6) par rapport à la direction d'avancement A et étant recourbé à son extrémité inférieure sur près de 90°, de façon que l'extrémité inférieure (6a) dudit tube (6) soit à l'intérieur de la courbe formée par la partie recourbée (8b) dudit fer plat (8).

Fig.1

EP 0 085 621 A2

Croydon Printing Company Ltd

1

## Dispositifs enfouisseurs pour semoirs.

La présente invention a pour objet un perfectionnement aux semoirs agricoles et plus particulièrement aux semoirs associés à une machine de travail du sol telle qu'une fraise ou une herse rotative.

Les semoirs connus comportent un mécanisme de distribution des graines qui sont acheminées par des goulottes vers des dispositifs d'enfouissement. Ces dispositifs d'enfouissements sont constitués soit par deux disques obliques qui sont tangents à leur base, soit par des sabots. La terre est écartée par les deux disques ou les sabots et les graines tombent dans l'espace ainsi libéré ; puis la terre écartée retombe en recouvrant les graines. Ces dispositifs sont utilisés depuis de très nombreuses années. Ils présentent toutefois l'inconvénient de trop bien écarter la terre latéralement par effet de coin ou d'étrave de sorte qu'elle ne retombe pas toujours régulièrement, qu'ainsi il peut se former des poches d'air ou chambres autour des graines qui alors germent dans de mauvaises conditions et périssent.

La présente invention a pour objet un dispositif d'enfouissement des graines qui supprime ces inconvénients.

A titre d'exemple non limitatif et pour faciliter la compréhension de l'invention, on a représenté aux dessins annexés :

Figure 1, une vue en élévation latérale du dispositif selon l'invention ;

Figure 2, une vue partielle de face de la figure 1 ;

Figure 3, une variante de la figure 1.

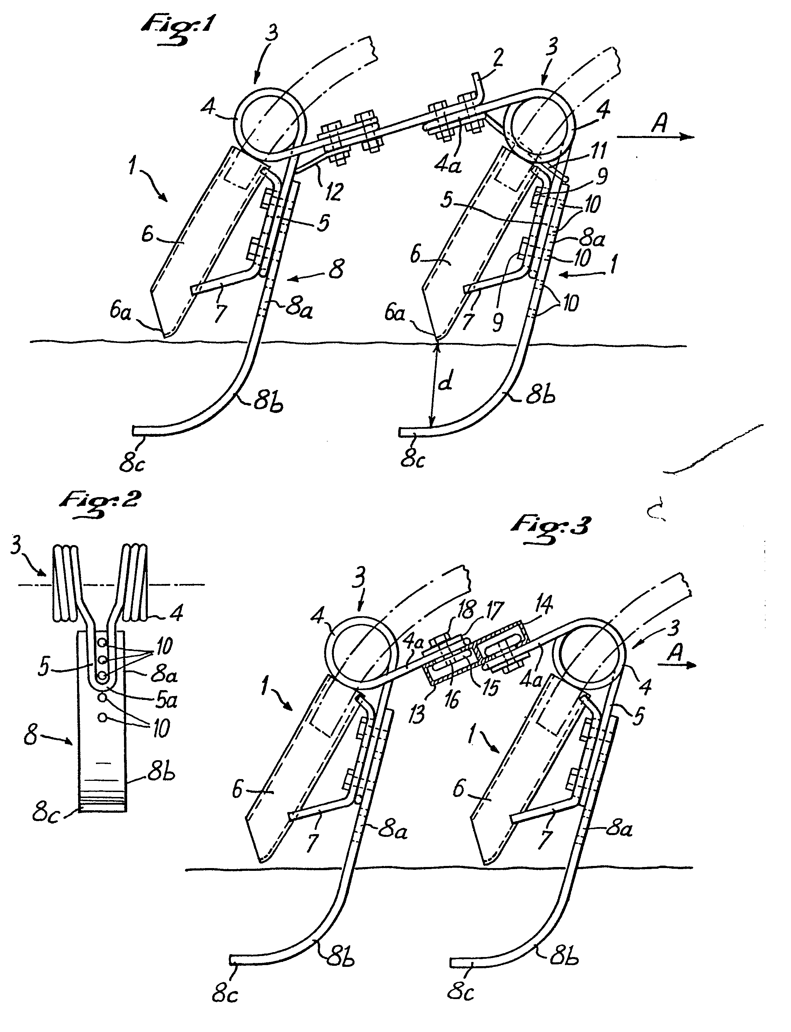

Un semoir comporte en général une pluralité de dispositifs d'enfouissement des graines qui sont disposés en quinconce sur deux rangées : sur la figure 1, on voit ainsi deux dispositifs qui semblent être l'un derrière l'autre mais qui sont en réalité décalés l'un par rapport à l'autre.

En se reportant à ces figures, on voit que les mécanismes enfouisseurs, désignés par la référence générale 1 sont portés par un support transversal 2, lui-même relié au châssis du semoir par des moyens non représentés parce que ne faisant pas partie de la présente invention. Les dispositifs enfouisseurs 1 sont alternativement fixés en avant et en arrière dudit support transversal 2, par rapport à la direction d'avancement A. Ils sont fixés par l'intermédiaire d'une patte 3, en tige de ressort, cette patte 3 comportant en son centre une ou plusieurs boucles en spirale 4. A l'extrémité 5 de chaque patte 3 sont fixés, d'une part un tube rigide 6 et d'autre part un fer plat 8. Le tube rigide 6 est soudé à un support 7 fixé par deux boulons 9. Le fer plat 8 comporte une partie de fixation 8a qui est rectiligne et une partie active 8b qui est recourbée vers l'arrière en arc-de-cercle sur près de 90°. La partie 8a comporte une pluralité de trous taraudés 10 permettant de la fixer dans de multiples positions par rapport à l'extrémité 5 de la patte 3. Comme cela est représenté sur la figure 1, la patte 5 est disposée de façon trainante par rapport à la direction d'avancement A, c'est-à-dire qu'elle est dirigée obliquement vers le bas et vers l'arrière. La partie active 8b est recourbée de façon telle que son extrémité 8c soit pratiquement horizontale et s'étende au moins jusqu'en dessous de l'extrémité inférieure du tube 6 et même un peu au-delà vers l'arrière ; de sorte que l'extrémité dudit tube 6 soit à l'intérieur de la courbe formée dans la partie 8b. En se reportant à la figure 2, on voit que la patte élastique 3 est constituée de deux brins de tige d'acier à ressorts pliés à 180° en 5a, puis constituant deux spires 4 symétriques prolongées chacune par une partie droite 4a qui permet sa fixation au support 2 par tout moyen de serrage approprié. Les boulons 9 permettent de serrer simultanément le support 7 et la partie de fixation 8a sur la partie 5 de la patte élastique 3. On voit que l'on peut déplacer l'ensemble support 7-boulons 9-partie de fixation 8a dans la fente ménagée par les deux parties 5b repliées de part et d'autre de 5a. Cette disposition permet de régler en hauteur la position du dispositif enfouisseur 1 constitué par l'association du tube 6 et du fer plat recourbé 8, par rapport au support 2.

De préférence, le fer plat recourbé 8 comporte une pluralité de trous taraudés 10 de sorte que l'on peut modifier la position de la base 6a du tube 6 par rapport à l'extrémité horizontale 8c du fer plat 8.

En désignant par "d" la distance séparant le point 6a et 8c, cette distance doit être comprise entre 10 mm et 80 mm.

De préférence, les ressorts constitués par les spires 4 de la patte élastique 3 doivent être pré-chargés afin d'éviter que lesdites pattes 3 ne soient trop souples.

A cette fin, les ressorts constitués par les spires 4 sont bandés de façon permanente par des moyens tels que 11 et 12. Le moyen 11 est constitué par un étrier fixé au support transversal 2 et qui tire en arrière la partie 5 de la patte 3 des dispositifs placés en avant du support transversal 2; tandis que le moyen 12 est constitué par une butée fixée au support 2, maintenant vers l'arrière
la partie 5 de la patte 3 des dispositifs placés en .
arrière du support 2.

Le niveau moyen de la surface du sol est indiqué en pointillé en B, les extrémités des goulottes 13 amenant les
graines sont représentées en traits tiretés.

Ces dispositifs enfouisseurs 1 sont de préférence destinés
à équiper un semoir (non représenté) monté sur une machine
à travailler le sol par exemple une herse rotative (également non représentée).

Le sol étant très ameubli par une machine de ce genre,
le fer plat courbé 8 s'enfonce facilement dans la terre
meuble et ouvre une sorte de tranchée aux parois latérales
non-lissées : les graines tombent immédiatement derrière la
partie 8c (ou juste sur l'extrémité de celle-ci et de là
sur le sol). Comme les parois latérales de la tranchée
faite par la partie active 8b ne sont pas lissées, elles
s'effondrent d'elles-mêmes très facilement et recouvrent les
graines sans laisser de poches d'air. Par contre, le fond
de la tranchée réalisée par la partie active 8b est
relativement tassé, de sorte que les graines reposent sur
un sol un peu tassé,ce qui est très avantageux.

La distance "d" est déterminée en fonction de la friabilité
de la terre de façon à assurer que les parois de la tranchée
ne s'effondrent pas avant que les graines ne soient tombées.

De préférence, comme cela est représenté, le tube 6 est
également dirigé obliquement vers l'arrière et vers le bas,
son oblicité étant supérieure à celle de la partie de fixation 8a.

La figure 3 représente une variante de réalisation relative
à la constitution du support transversal 2 portant les
dispositifs enfouisseurs 1.

En se reportant à cette figure, on voit que ledit support 2 peut avantageusement être constitué de deux tubes 13 et 14, identiques, de section rectangulaire et comportant sur toute leur longueur une fente sur un de leurs côtés, soit le côté supérieur 13, soit le côté inférieur 14. Grâce à cette fente, on peut glisser à l'intérieur de chaque tube 13 ou 14 un taquet 15 solidaire d'une tige filetée 16, laquelle traverse une rondelle 17 située en dehors du tube et sur laquelle vient se visser un écrou 18. Cette disposition permet de faire glisser tout l'ensemble de fixation d'une patte 4a d'un dispositif enfouisseur 1 et donc de régler à volonté l'écartement latéral des divers dispositifs 1 les uns par rapport aux autres sur les deux tubes 13 et 14.

6 0085621

Revendications de brevet.

1. Dispositifs enfouisseurs pour semoirs comportant un mécanisme de distribution de graines alimentant une pluralité de goulottes, chacune débouchant dans un dispositif enfouisseur, caractérisés par le fait que chaque dispositif enfouisseur (1) est constitué par un fer plat (8) et un tube (6) dans lequel arrivent les graines, le fer plat (8) étant situé en avant du tube (6) par rapport à la direction d'avancement A et étant recourbé à son extrémité inférieure sur près de 90° de façon que l'extrémité inférieure (6a) dudit tube (6) soit à l'intérieur de la courbe formée par la partie recourbée (8b) dudit fer plat (8).

2. Dispositif selon la revendication 1, dans lequel ledit fer plat comporte : une partie de fixation (8a) munie d'une pluralité de trous (10) permettant de le fixer dans plusieurs positions par rapport au tube (6) ; une partie active (8b) recourbée de près de 90°, qui s'enfonce dans la terre meuble ; une extrémité (8c) pratiquement horizontale.

3. Dispositif selon la revendication 2, dans lequel la distance séparant la base (6a) du tube (6) et l'extrémité (8c) du fer plat recourbé (8) est comprise entre 10 mm et 80 mm.

4. Dispositif selon l'une quelconque des revendications précédentes, caractérisé par le fait qu'il est fixé à un support transversal (2) par l'intermédiaire d'une patte élastique (3).

5. Dispositif selon la revendication 4, dans lequel la partie de fixation (8a) du fer plat (8) est légèrement oblique vers l'arrière et vers le bas.

6. Dispositif selon l'une quelconque des revendications précédentes, dans lequel le tube (6) d'amenée des graines est dirigé obliquement vers l'arrière et vers le bas.

7. Dispositif selon la revendication 6, dans lequel l'obliçité du tube (6) est supérieure à celle de la partie de fixation (8a) du fer plat recourbé (8).

8. Dispositif selon l'une quelconque des revendications précédentes, caractérisé par le fait qu'il est fixé sur la partie inférieure (5) de la patte élastique (3) par des moyens permettant de le régler en hauteur.

9. Dispositif selon l'une quelconque des revendications précédentes, caractérisé par le fait que chaque patte élastique (3) comporte une partie médiane (4) faisant ressort.

10. Dispositif selon la revendication 9, dans lequel la partie médiane faisant ressort est constituée par des spires (4).

11. Dispositif selon la revendication 9 ou 10, dans lequel le ressort (4) de la patte élastique (3) est maintenu bandé par un moyen approprié, étrier (11) ou butée (12).

12. Dispositif selon l'une quelconque des revendications précédentes, caractérisé par le fait que la position de la patte élastique (3) qui le supporte peut être réglée à volonté sur le support transversal (2).

13. Dispositif selon la revendication 12, dans lequel le support transversal (2) est constitué par deux tubes accolés (13, 14) chaque tube étant de section rectangulaire et comportant une fente longitudinale dans laquelle peut se déplacer une tige filetée (16) permettant de serrer la branche (4a) de la patte (3) entre une rondelle (17) extérieure au tube (13, 14) et un taquet (15) situé à l'intérieur du tube ; de telle sorte que l'écartement latéral entre les dispositifs enfouisseurs (1) soit réglable .

0085621

*Fig.1*

*Fig.2*

*Fig.3*